# EUROPEAN PATENT APPLICATION

(11) **EP 2 075 971 A2**
(43) Date of publication of application: **01.07.2009**
(21) Application number: 08162273.0
(22) Date of filing: 12.08.2008
(51) Int. Cl.: H04L 25/03

(54) **Transmission characteristic adjustment device, circuit board, and transmission characteristic adjustment method**

(30) Priority: 26.12.2007 JP 2007334546
(71) Applicant: Fujitsu Limited, Kawasaki-shi, Kanagawa 211-8588 (JP)
(72) Inventor: Tsubamoto, Daita, Kawasaki-shi, Kanagawa 211-8588 (JP); Suwada, Makoto, Kawasaki-shi Kanagawa 211-8588 (JP); Yokemura, Hitoshi, Kawasaki-shi Kanagawa 211-8588 (JP); Tosaka, Masaki, Kawasaki-shi Kanagawa 211-8588 (JP)
(74) Representative: Wilding, Frances Ward

(57) **Abstract**

A transmission characteristic adjustment device with high reliability in a transmission characteristic that can adjust a circuit before an error occurs and does not generate an error is provided. A transmission characteristic adjustment device that adjusts a transmission characteristic between a transmission element and a receiving element interposing a transmission path, includes: a sight test circuit that is provided on the receiving element side and detects an eye pattern aperture; a margin calculation circuit that calculates a margin with respect to a mask included in the detected eye pattern aperture; a circuit element adjustment circuit that evaluates a setting value of a circuit element of the transmission element or the receiving element having influence on a receiving waveform based on fluctuation of the calculated margin, and changes the setting value of the circuit element of the transmission element or the receiving element based on a result of the evaluation.

## Description

### BACKGROUND OF THE INVENTION

### 1. Field of the Invention

The present invention relates to a transmission characteristic adjustment device, a circuit board and a transmission characteristic adjustment method that are applied to a bus and the like and adjust a transmission characteristic between a transmission element and a receiving element interposing a transmission path. In particular, the present invention relates to a transmission characteristic adjustment device, a circuit board, and a transmission characteristic adjustment method that evaluate a setting value of a circuit element of a transmission element or a receiving element having an influence on a receiving waveform based on fluctuation of a margin between an eye pattern aperture and a mask, and change the setting value of the circuit element of the transmission element or the receiving element based on a result of the evaluation.

### 2. Description of the Related Art

In recent years, along increase in speed of signal transmission, there is a tendency that a margin of the signal transmission (waveform margin) becomes smaller. Accordingly, there has been an increased need for sequential adjustment of a transmission characteristic with respect to proper locations on a device, not only in design and evaluation stages.

In contrast, a technique which has been conventionally provided adopts a system that adjusts any circuit element to adjust a transmission characteristic while monitoring an error factor. For example, as a reference document, there is a patent document such as Jpn. Pat. Appln. Laid-Open Publication No. 2003-32187.

However, when a circuit element is adjusted while an error factor is monitored, an error factor of a certain degree needs to be tolerated. Accordingly, there has been a problem that the conventional technique can only be applied to a system that can tolerate an error factor of a certain degree.

### SUMMARY OF THE INVENTION

It is desirable to solve the problem described above. It is also desirable to provide a transmission characteristic adjustment device with high reliability in a transmission characteristic that can adjust a circuit before an error occurs and does not generate an error, a circuit board incorporating such a transmission characteristic adjustment device, and a transmission characteristic adjustment method.

According to an aspect of embodiments of the present invention, there is provided a transmission characteristic adjustment device that adjusts a transmission characteristic between a transmission element and a receiving element interposing a transmission path. The transmission characteristic adjustment device includes: an eye pattern aperture detection section that is provided on the receiving element side and detects an eye pattern aperture; a margin calculation section that calculates a margin with respect to a mask included in the eye pattern aperture detected by the eye pattern aperture detection section; a circuit element setting section that evaluates a setting value of a circuit element of the transmission element or the receiving element having influence on a receiving waveform based on fluctuation of the margin calculated by the margin calculation section, and changes the setting value of the circuit element of the transmission element or the receiving element based on a result of the evaluation.

In addition, according to an aspect of embodiments of the present invention, there is provided a transmission characteristic adjustment method that adjusts a transmission characteristic between a transmission element and a receiving element interposing a transmission path. The method includes: a step that detects an eye pattern aperture; a step that calculates a margin with respect to a mask included in the eye pattern aperture; a step that detects fluctuation of the calculated margin; and a step that evaluates a setting value of a circuit element of the transmission element or the receiving element having influence on a receiving waveform based on the detected fluctuation of the margin, and changes the setting value of the circuit element of the transmission element or the receiving element based on a result of the evaluation.

Further, according to an aspect of embodiments of the present invention, there is provided a circuit board having a transmission characteristic adjustment device that adjusts a transmission characteristic between a transmission element and a receiving element interposing a transmission path. The transmission characteristic adjustment device includes: an eye pattern aperture detection section that is provided on the receiving element side and detects an eye pattern aperture; a margin calculation section that calculates a margin with respect to a mask included in the eye pattern aperture detected by the eye pattern aperture detection section; and a circuit element setting section that detects fluctuation of a margin calculated by the margin calculation section, evaluates a setting value of a circuit element of the transmission element or the receiving element having influence on a receiving waveform based on the fluctuation of the detected margin, and changes the setting value of the circuit element of the transmission element or the receiving element based on a result of the evaluation.

According to embodiments of the present invention, evaluation of a setting is carried out based on a fluctuation of a margin, and a transmission characteristic can be adjusted depending on a result of the evaluation. Accordingly, an advantageous effect that transmission with high reliability can always be carried out can be achieved.

### BRIEF DESCRIPTION OF THE DRAWINGS

Preferred features of the present invention will now be described, purely by way of example, with reference to the accompanying drawings, in which:-
FIG. 1 is a block diagram showing a first embodiment of the present invention;
FIG. 2 is a flowchart showing entire operation according to the first embodiment of the present invention;
FIG. 3 is a block diagram explaining operation according to the first embodiment of the present invention;
FIG. 4 is a view showing a waveform determination method;
FIG. 5 is a view showing a pass and error determination method;
FIG. 6 is a view showing a calculation method of a margin;
FIG. 7 is a block diagram explaining evaluation operation according to the first embodiment of the present invention;
FIG. 8 is a flowchart explaining the evaluation operation according to the first embodiment of the present invention;
FIG. 9 is a block diagram explaining setting operation according to the first embodiment of the present invention;
FIG. 10 is a flowchart explaining the setting operation according to the first embodiment of the present invention;
FIG. 11 is a block diagram showing an example of a data coincidence monitoring circuit according to the first embodiment of the present invention;
FIG. 12 is a block diagram showing a second embodiment of the present invention;
FIG. 13 is a block diagram showing a third embodiment of the present invention;
FIG. 14 is a block diagram showing a fourth embodiment of the present invention;
FIG. 15 is a block diagram showing a fifth embodiment of the present invention;
FIGS. 16A and 16B are block diagrams showing a sixth embodiment of the present invention;
FIGS. 17A and 17B are block diagrams showing a seventh embodiment of the present invention;
FIGS. 18A and 18B are block diagrams showing an eighth embodiment of the present invention;
FIGS. 19A and 19B are block diagrams showing a ninth embodiment of the present invention;
FIGS. 20A and 20B are block diagrams showing a tenth embodiment of the present invention; and
FIGS. 21A and 21B are block diagrams showing an eleventh embodiment of the present invention.

### DETAILED DESCRIPTION OF THE PREFERRED EMBODIMENTS

Hereinafter, an embodiment of the present invention will be described with reference to the accompanying drawings.

### <First Embodiment>

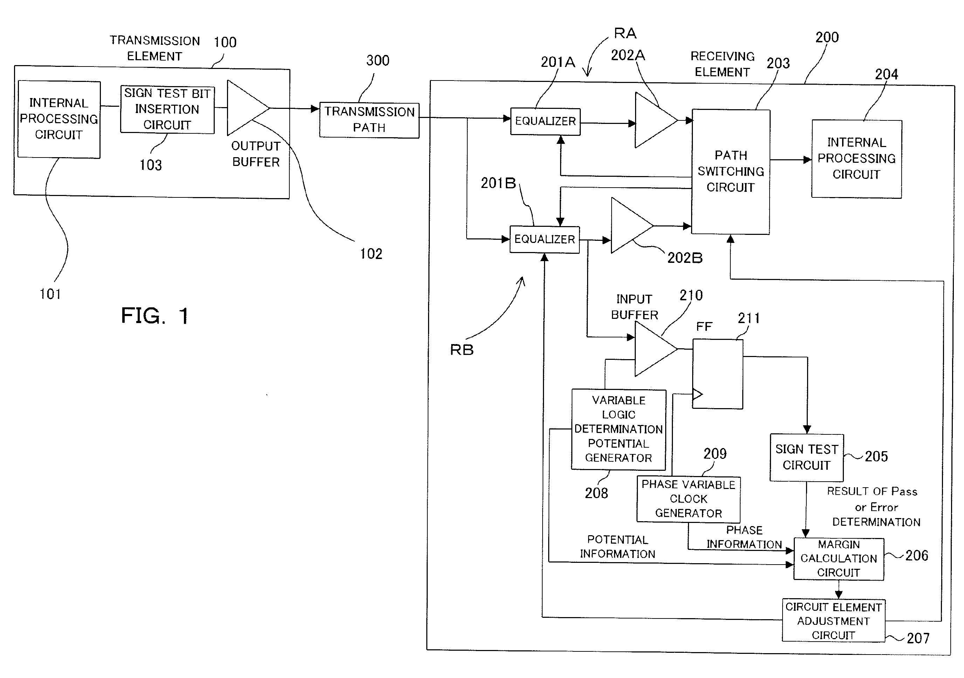

FIG. 1 is a block diagram showing an entire configuration according to a first embodiment of the present invention. The embodiment includes a transmission element 100, a receiving element 200, and a transmission path 300 provided between the transmission element 100 and the receiving element 200.

The transmission element 100 includes an internal processing circuit 101, an output buffer 102, and a sign test bit insertion circuit 103. The output buffer 102 outputs a result of processing of the internal processing circuit 101 to the transmission path. The sign test bit insertion circuit 103 is provided between the internal processing circuit 101 and the output buffer 102.

In addition, the receiving element 200 includes receiving systems RA and RB, a path switching circuit 203, and an internal processing circuit 204. The receiving systems RA and RB include equalizers 201A and 201B and input buffers 202A and 202B.

Then, the receiving system RB, which is one of the two receiving systems RA and RB, includes a sign test circuit (eye pattern aperture detection section) 205, a margin calculation circuit (margin calculation section) 206, a circuit element adjustment circuit (circuit element adjustment section) 207. The sign test circuit 205 adjusts an eye pattern aperture. The margin calculation circuit 206 calculates (measures) a margin (waveform margin) that an eye pattern aperture has with respect to a mask, and outputs the calculated margin as an index of quality of a transmission characteristic. The circuit element adjustment circuit 207 detects fluctuation of the margin calculated by the margin calculation circuit 206, evaluates a setting value of a circuit element (here, the equalizer 201B) having an influence on an eye pattern aperture based on the fluctuation, and adjusts the equalizer 201B (the setting value of the circuit element) based on a result of the evaluation.

Further, in order to detect an eye pattern aperture by the sign test circuit 205 and calculate a margin by the margin calculation circuit 206, the receiving element 200 includes a variable logic determination potential generator 208, a phase variable clock generator 209, an input buffer 210, and a flip-flop 211.

The sign test circuit 205, the margin calculation circuit 206, and the circuit element adjustment circuit 207 configure a margin monitoring system and configure the transmission characteristic adjustment device in the present embodiment. In addition, a setting value of the equalizer 201B adjusted by the circuit element adjustment circuit 207 is also set to the equalizer 201A as described later.

In the above configuration, a result of pass or error determination from the sign test circuit 205, phase information from the phase variable clock generator 209, and potential information from the variable logic determination potential generator 208 are input to the margin calculation circuit 206 in order to calculate a margin.

An output of the equalizer 201B and determination potential from the variable logic determination potential generator 208 are compared in an input buffer. Then, a result of such comparison is input to the sign test circuit 205 as an output of the flip-flop 211 by a clock from the phase variable clock generator 209. The sign test circuit 205 outputs an eye pattern aperture (a result of pass or error determination) to the margin calculation circuit 206.

Hereinafter, detailed description of the above will be made. The sign test bit insertion circuit 103 provided in the transmission element 100 is a circuit for inserting a bit for sign testing at certain intervals in data to be transmitted and received. The number of the bits to be inserted is as many as enabling sensing conditional variable of the transmission and receiving elements. More specifically, about 20 to 30 bits are necessary.

The transmission path 300 is a line that connects the transmission element 100 and the receiving element 200. More specifically, the transmission path 300 is made of a printed wiring board, a cable, and the like.

The equalizers 201A and 201B are circuits that compensate a high frequency component lost in the transmission path on the receiving element 200 side.

The variable logic determination potential generator 208 is a circuit that can change potential working as a reference to determine a logic of "High" and "Low" of a signal.

The phase variable clock (CLK) generator 209 is a circuit that can change a phase of a clock by a duration that is calculated by dividing one cycle by any number.

The sign test circuit 205 is a circuit that carries out sign testing by using a bit inserted at the sign test bit insertion circuit 103 of the transmission element 100.

The margin calculation circuit 206 is a circuit that detects an aperture of an eye pattern by using a result of the sign test circuit 205 as input information, and outputs a margin as an index of quality the aperture.

The circuit element adjustment circuit 207 is a circuit that searches for setting that maximizes a margin by controlling a circuit element that has an influence on an eye pattern aperture by using the margin as input information.

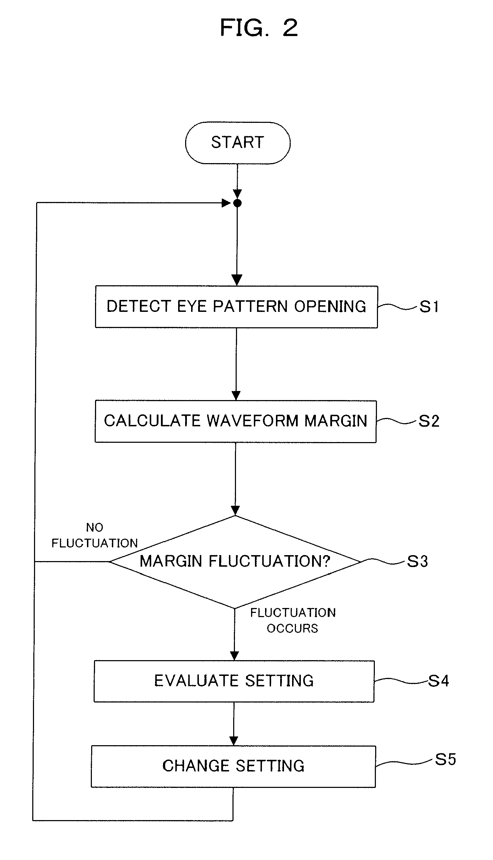

Entire operation of the present embodiment based on the configuration described above will be described with reference to FIG. 2.

First, detection of an eye pattern aperture as a transmission characteristic is carried out by the sign test circuit 205 (S1).

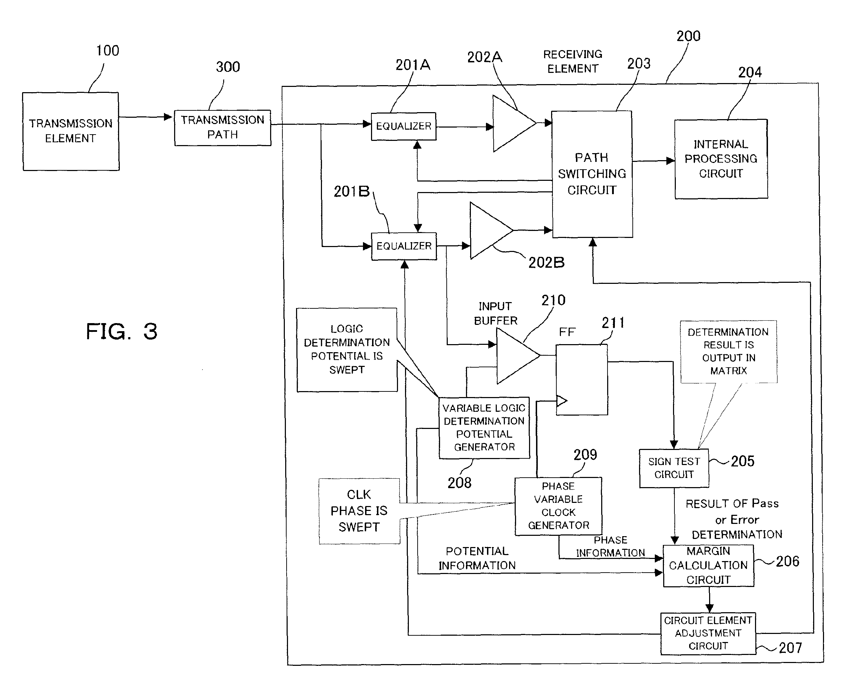

In order to detect an eye pattern aperture, the receiving element 200 sweeps a logic determination level and a logic determination time as shown in FIG. 3. The sweep of a logic confirmation level is realized by changing a reference voltage of an input buffer by the variable logic determination potential generator. The sweep of logic confirmation time is realized in a manner that the phase variable clock generator 209 changes a phase of a clock input to the flip-flop located in a next stage of the input buffer.

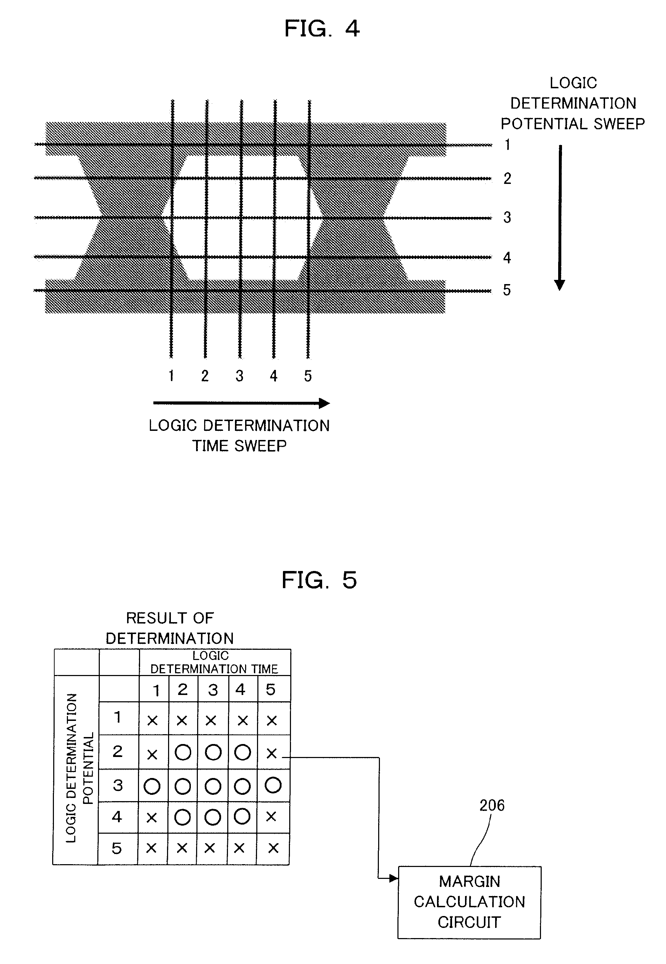

Sign testing is carried out in a matrix as shown in FIG. 4 with respect to all combinations of the swept logic determination potential and the swept logic determination time. Then, a result of the sign testing is output as shown in FIG. 5. In FIGS. 4 and 5, the logic determination potential sweep is shown in a vertical direction, and the logic determination time sweep is shown in a horizontal direction.

Next, the margin calculation circuit 206 calculates a margin (S2).

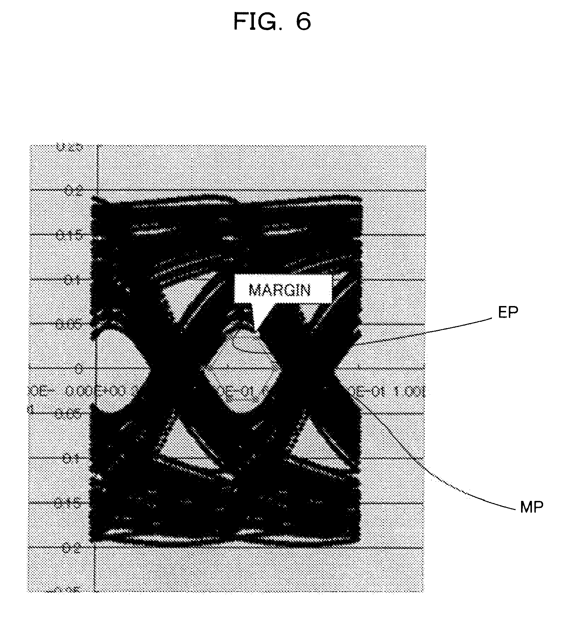

A margin is calculated by data showing the eye pattern aperture detected by the sign test circuit 205. A margin is regulated by a section where a distance between a mask regulated with respect to the receiving element 200 and an inner side of the eye pattern aperture becomes shortest. A specific image is shown in FIG. 6.

In FIG. 6, a margin between an eye pattern aperture EP and a mask MP is calculated. The eye pattern aperture EP is generated by superposing waveform signal pieces having a regulated length cut from a waveform signal. The mask MP shows size of an aperture required for the eye pattern. As shown in FIG. 6, as the margin, there are a voltage axis margin (minimum difference voltage value) and a time axis margin (minimum difference time value) as a margin generated between an eye pattern aperture and a mask.

As an example of calculation of the margin, a waveform signal section in the vicinity of a time axis of each waveform signal piece is extracted in order to calculate a center position of an eye pattern aperture. Then, minimum time and maximum time included in time coordinate values of the extracted waveform signal section are detected. The center position of the eye pattern aperture is calculated based on the detected minimum time and maximum time.

Next, a time coordinate value and a voltage coordinate value of each characteristic point of the mask in case a center position of the mask is allocated at the calculated center position are calculated.

Then, a characteristic point that does not exist on a time axis of the characteristic points of the mask is set to be processed. In this manner, on the bases of a voltage coordinate value of the characteristic point to be processed and a voltage coordinate value at a position of a waveform signal piece associated with the characteristic point, the margin in the voltage axis direction is calculated.

Here, for example, a voltage coordinate value of a position of a waveform signal piece where a time coordinate value is closest to the characteristic point to be processed may be used as the voltage coordinate value of a position of the waveform signal piece associated with the characteristic point to be processed. Alternatively, a voltage coordinate value on a time coordinate value of the characteristic point to be processed that is obtained by linearly interpolating two positions of waveform signal pieces that are adjacent to each other in a manner sandwiching the characteristic point to be processed can be used.

Next, a characteristic point that exits on the time axis of the characteristic points of the mask is set to be processed. In this manner, on the basis of a time coordinate value of the characteristic point to be processed and a time coordinate value at a position of a waveform signal piece associated with the characteristic point, the margin in the time axis direction is calculated.

Here, for example, with respect to each waveform signal piece, a difference between the time coordinate value of the characteristic point to be processed and the time coordinate value of the position of the waveform signal piece associated with the characteristic point is calculated. Then, a smallest value among the calculated difference values is identified. In this manner, a margin in the time axis direction is calculated with respect to each characteristic point. Then, by selecting a margin with a smallest value from the margins, a margin in the time axis direction can finally be calculated.

With respect to margins, a voltage axis margin normally becomes small (has adverse effect) faster than a time axis margin. Accordingly, voltage value margins of four characteristic points shown in FIG. 6 are calculated by the margin calculation circuit 206, and the voltage value margins can be monitored by the circuit element adjustment circuit 207 as described later. However, needless to point out, the time axis margin may also be used.

Next, monitoring of fluctuation of a margin is carried out by the circuit element adjustment circuit 207 (S3).
Here, a margin which is an output from a margin calculation circuit is monitored in a certain cycle. When there is fluctuation in the margin, the operation moves to evaluation of setting (S4). When there is no fluctuation in the margin, the operation returns to (S1) without carrying out any processing. Monitoring of a margin is realized by setting any reference value with respect to a difference from a previous measurement.

Next, evaluation of setting is carried out by the circuit element adjustment circuit 207 (S4).

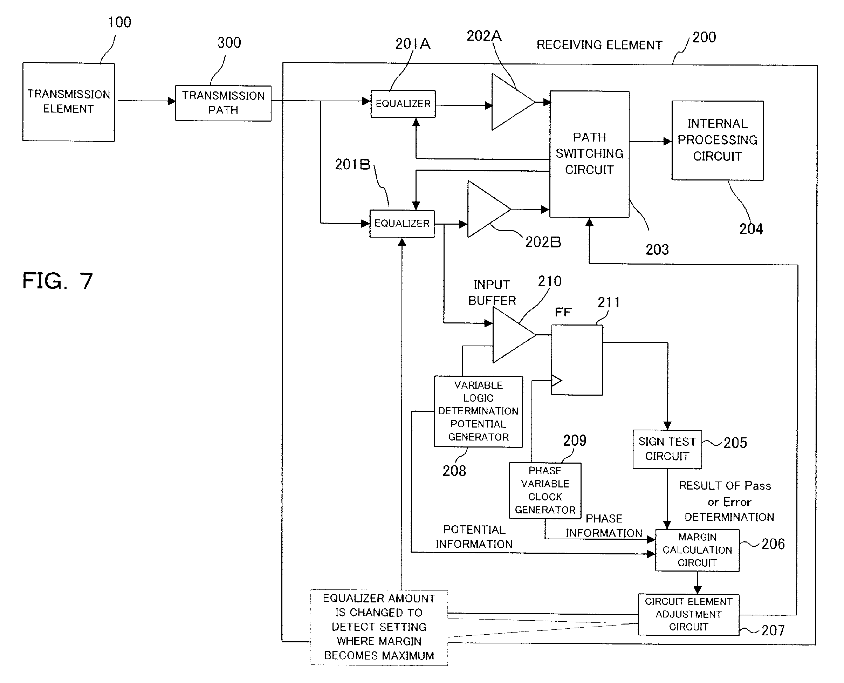

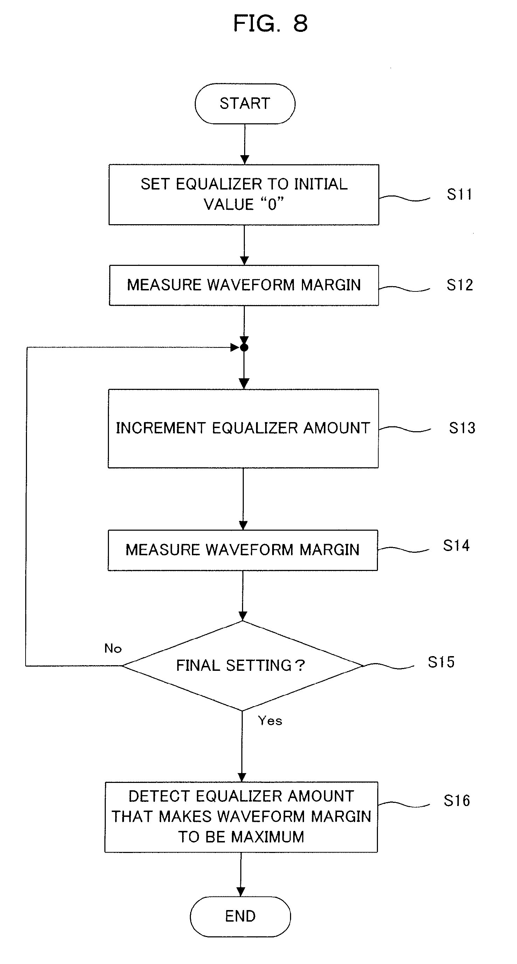

An operation image showing an example of the evaluation is shown in FIG. 7. Also, a detail of the operation is shown in a flowchart of FIG. 8.

First, an amplification amount (hereinafter referred to as the equalizer amount) with respect to a high frequency component of the equalizer 201B is set to an initial value "0" (S11). Next, a margin is measured (S12). Then, setting of the equalizer amount is changed to a next stage in an increasing direction (S13). A margin is measured again (S14). Then, the processing of (S13) and (S14) is performed for all setting values (S15). Then, setting with a maximum margin is detected and set to be an adopted value (S16).

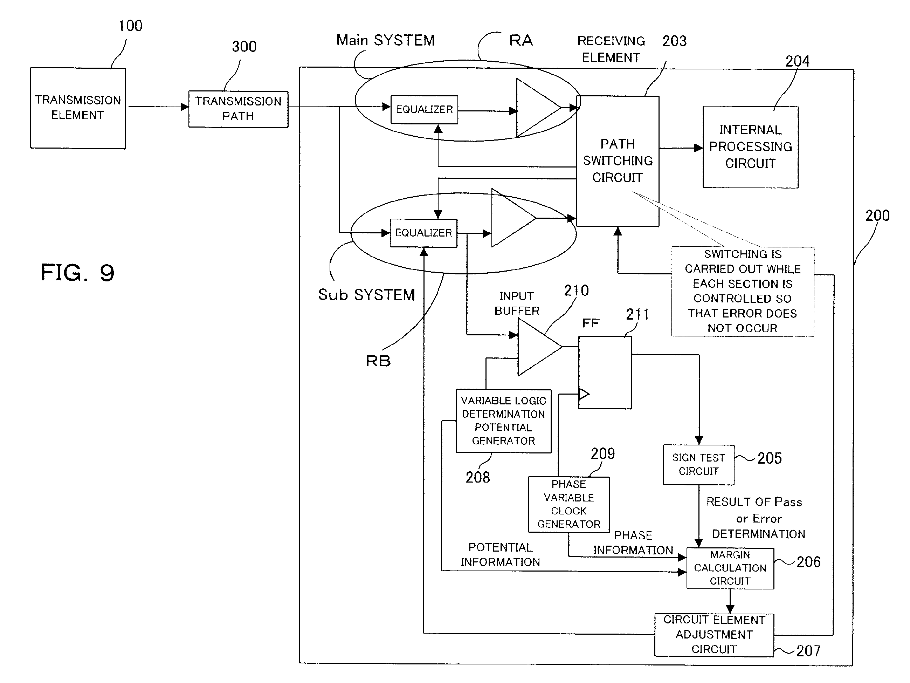

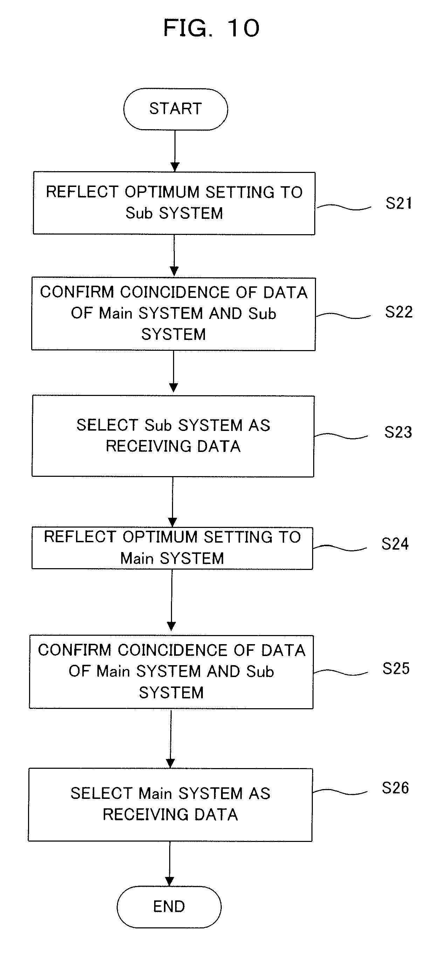

Description will be made with respect to a case of changing the setting value set in the above manner. When the setting detected above is reflected, the circuit needs to be controlled so that there is no error generated along the change of the setting. This function can be included in a "path switching circuit", as shown in FIG. 9 that shows an operation image of the path switching circuit. Specific steps are shown in a flowchart of FIG. 10.

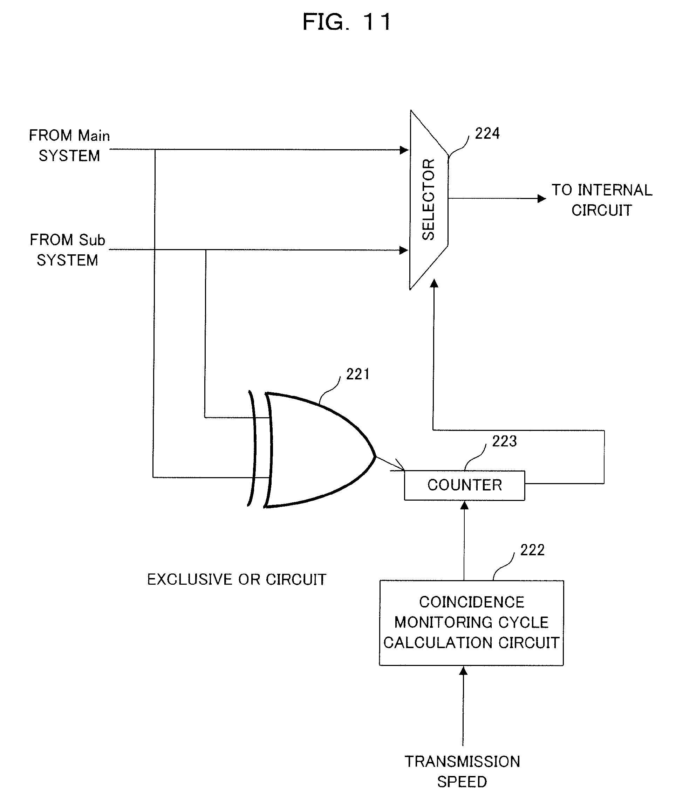

First, the extracted setting is reflected to a Sub system shown in FIG. 9 (S21). Next, that an error at the time of switching setting of the Sub system is settled is detected by coincidence of receiving data of the Sub system and a Main system (S22). An exclusive OR can be a specific example of a circuit for checking the coincidence of the data. In order to check the coincidence of the data, monitoring for about several milliseconds is necessary. The time required for the monitoring is equivalent to how many multiples of the transmission and receiving data is calculated. Then, by measuring a result of the calculation by a counter, desired time for monitoring the coincidence is obtained. An example of the circuit structure is shown in FIG. 11.

FIG. 11 shows an exclusive OR circuit 221, a coincidence monitoring cycle calculation circuit 222, a counter 223, and a selector 224. The exclusive OR circuit 221 inputs receiving data of the Main system and the Sub system. The coincidence monitoring cycle calculation circuit 222 monitors coincidence of outputs of the exclusive OR circuit 221. The counter 223 counts for a cycle instructed by the coincidence monitoring cycle calculation circuit 222. The selector 224 switches the Main system and the Sub system based on a count value of the counter 223.

Then, when the coincidence of the Main system and the Sub system is confirmed (S22), the Sub system is selected as the receiving data (S23). Then, setting of the Sub system is reflected to the Main system (S24). Then, when settlement of an error at the time of switching setting of the Main system is confirmed by the coincidence of the receiving data of the Sub system and the Main system (S25), the Main system is selected as the receiving data (S26).

### <Second Embodiment>

In the first embodiment, an equalizer is adopted as a circuit element adjusted by a circuit element, that is, the circuit element adjustment circuit 207, which controls a transfer characteristic. A similar advantageous effect can be obtained by controlling the transmission element 100 and the receiving element 200.

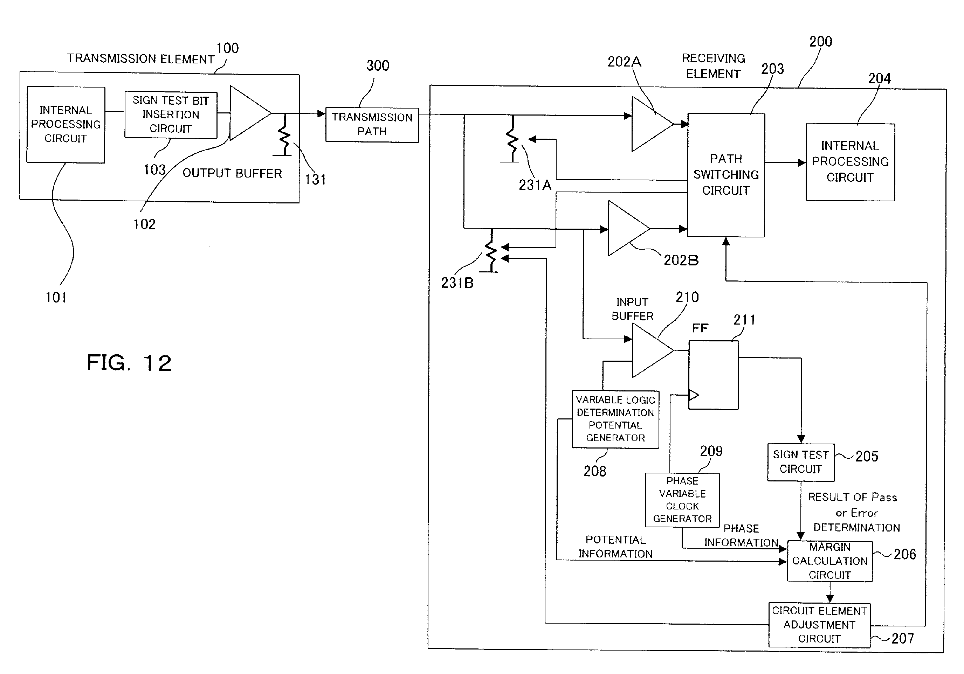

For example, as shown in FIG. 12, in the second embodiment, by controlling changes of values of internal termination resistors 131, 231A, and 231B provided on an output side of the output buffer 102 of the transmission element 100 and input sides of the input buffers 202A and 202B of the receiving element 200 which are both ends of the transmission path, an advantageous effect similar to that of the first embodiment can be obtained.

### <Third Embodiment>

In addition, in a third embodiment, as setting of a circuit element, a transmission system of a transmission element 100A can be made redundant. In the first embodiment described above, a redundant circuit is configured only on the receiving element side. Accordingly, a circuit element on the transmission side cannot be adjusted.

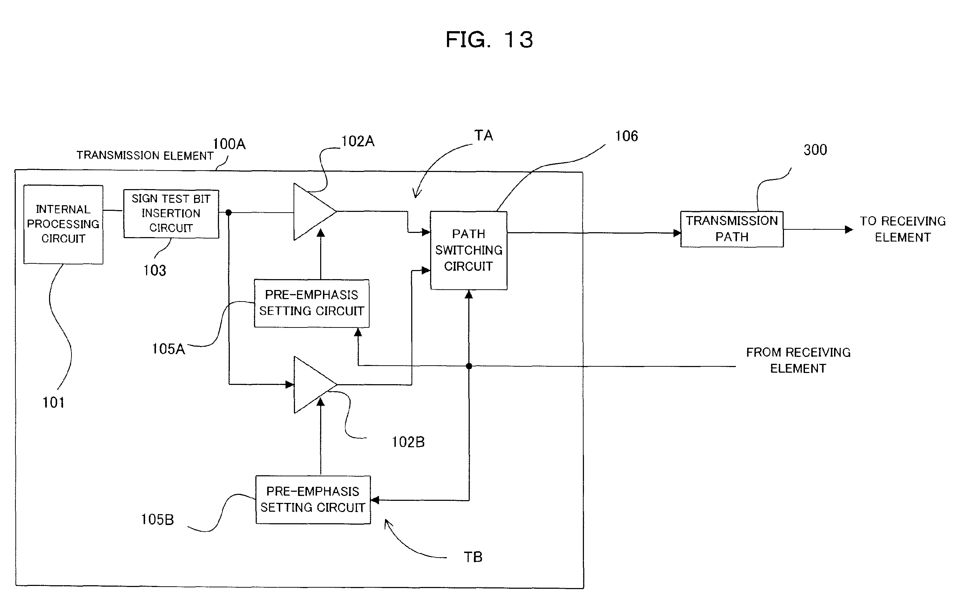

In view of the above, as shown in FIG. 13, the data transmission system in the transmission element 100A is included redundantly. In this manner, a similar advantageous effect can be obtained by adjusting a transmission characteristic by switching a pre-emphasis amount, amplitude, and a data transmission system by a control signal transmitted from the receiving element side.

In FIG. 13, a plurality (two) of data transmission systems TA and TB are included in the transmission element. Also, each of the data transmission systems TA and TB includes output buffers 102A and 102B and pre-emphasis setting circuits 105A and 105B. Further, the transmission element 100A includes a path switching circuit 106 that switches the above transmission systems by a control signal from the circuit element adjustment circuit 207 on the receiving element 200 side.

### <Fourth Embodiment>

The first embodiment adopts a system that monitors a margin calculated based on an eye pattern aperture, and adjusts a circuit element when there is fluctuation in the margin. The above adjusting operation of the circuit element may be carried out periodically or cyclically.

In contrast, the margin changes in conjunction with a component temperature on a print wiring board. Therefore, while a temperature of each component is monitored, the adjusting operation of the circuit element is performed (a starting trigger of the circuit adjustment is set) when there is fluctuation in the temperature. In this manner as well, a transmission characteristic with higher reliability can be obtained in a manner taking an environmental temperature into consideration.

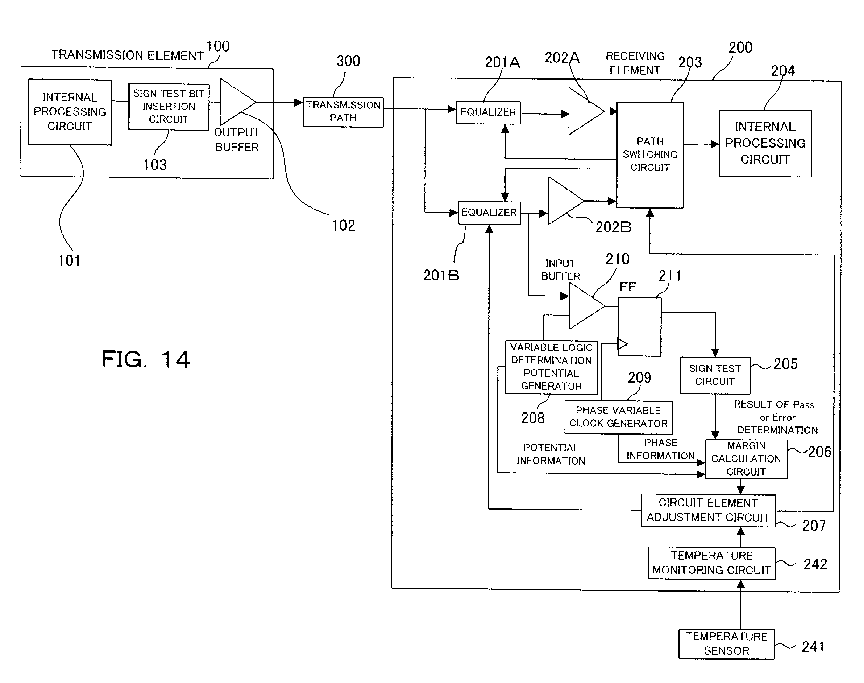

FIG. 14 is a block diagram showing the fourth embodiment. The fourth embodiment includes a temperature sensor 241 and a temperature monitoring circuit 242 that monitors a temperature from the temperature sensor 241. The circuit element adjustment circuit 207 starts the adjusting operation of the circuit element when there is a temperature change which is above a predetermined threshold based on a result of the monitoring of the temperature monitoring circuit 242. As a matter of course, the start of the adjusting operation may be combined with operation that is carried out periodically.

### <Fifth Embodiment>

Further, as a fifth embodiment, the adjusting operation may be started based on fluctuation in a power supply voltage. A margin changes in conjunction with a potential of a power supply system on the print wiring board. Therefore, while a power supply voltage on the print board is monitored, the adjusting operation of the circuit element is performed (a starting trigger of the circuit adjustment is set) when there is fluctuation in the power supply voltage. In this manner as well, a transmission characteristic with higher reliability can be obtained while an environmental temperature is taken into consideration.

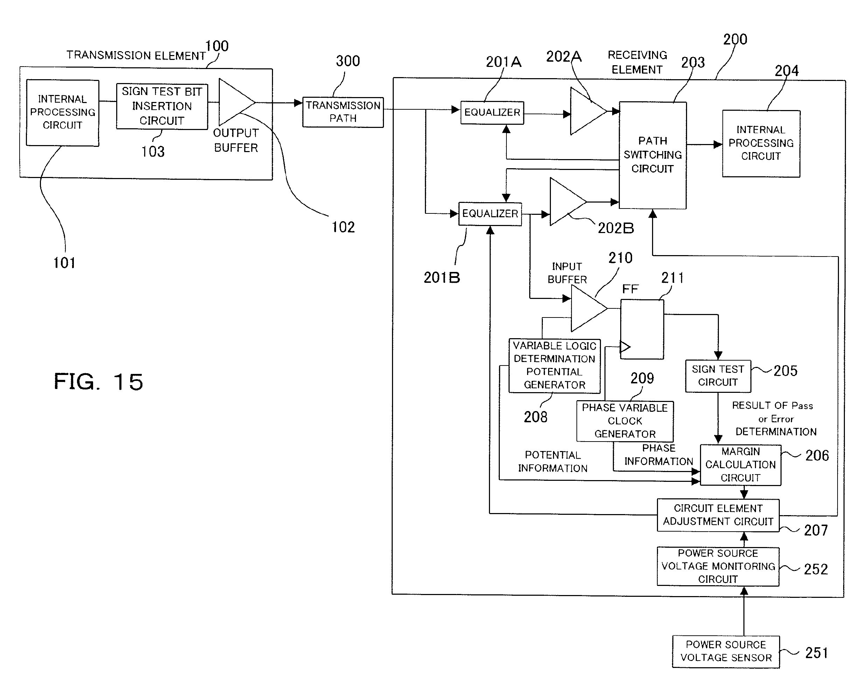

FIG. 15 is a block diagram showing the fifth embodiment. The fifth embodiment includes a power supply voltage sensor 251 and a power supply voltage monitoring circuit 252 that monitors a power supply voltage from the power supply voltage sensor 251. The circuit element adjustment circuit 207 starts the adjusting operation of the circuit element when there is fluctuation in the power supply voltage which is above a predetermined threshold based on a result of the monitoring of the power supply voltage monitoring circuit 252. In this manner as well, a transmission characteristic with higher reliability can be obtained while an environmental temperature is taken into consideration. As a matter of course, the start of the adjusting operation may be combined with operation that is carried out periodically, or a temperature change described in the fourth embodiment.

### <Sixth Embodiment>

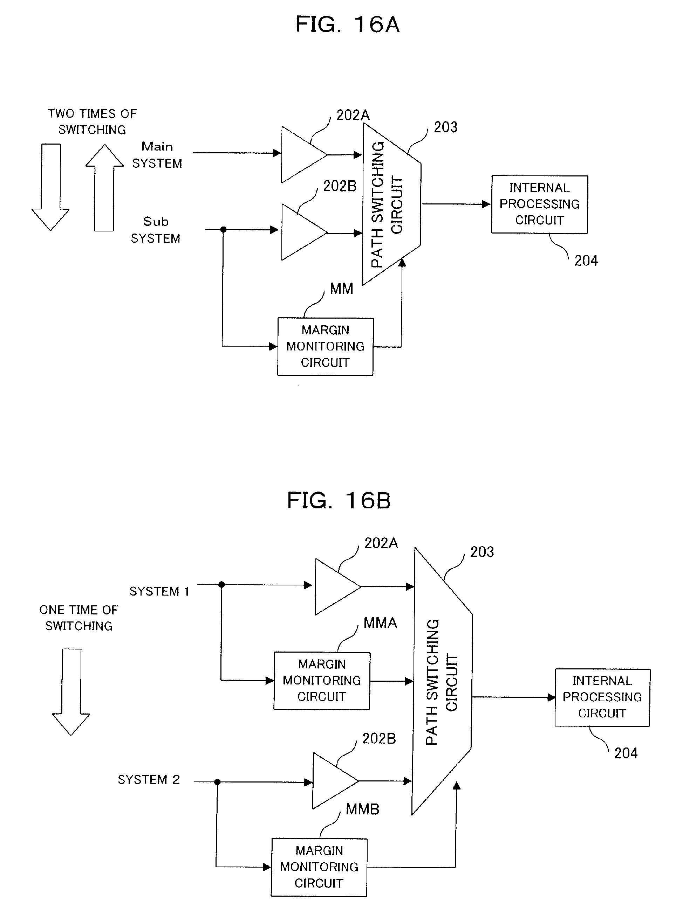

In the first embodiment, the signal transmission system is divided into two systems of Main and Sub, and a function of adjusting the circuit element is provided to the margin monitoring circuit MM provided on the Sub side. According to the above configuration, when setting is switched, processing of "Main" to "Sub" to "Main" in this order is necessary as shown in FIG. 16A. Accordingly, two times of switching is necessary.

In contrast, as shown in FIG. 16B, margin monitoring circuits MMA and MMB are provided in both of the systems of the Main system and the Sub system, and duplexing of the signal transmission system is made in a complete symmetrical form. In this manner, there is no longer a distinction between the Main system and the Sub system. Accordingly, switching of the circuits can be reduced to one time, which is a signal transmission system (1) to a signal transmission system (2).

### <Seventh Embodiment>

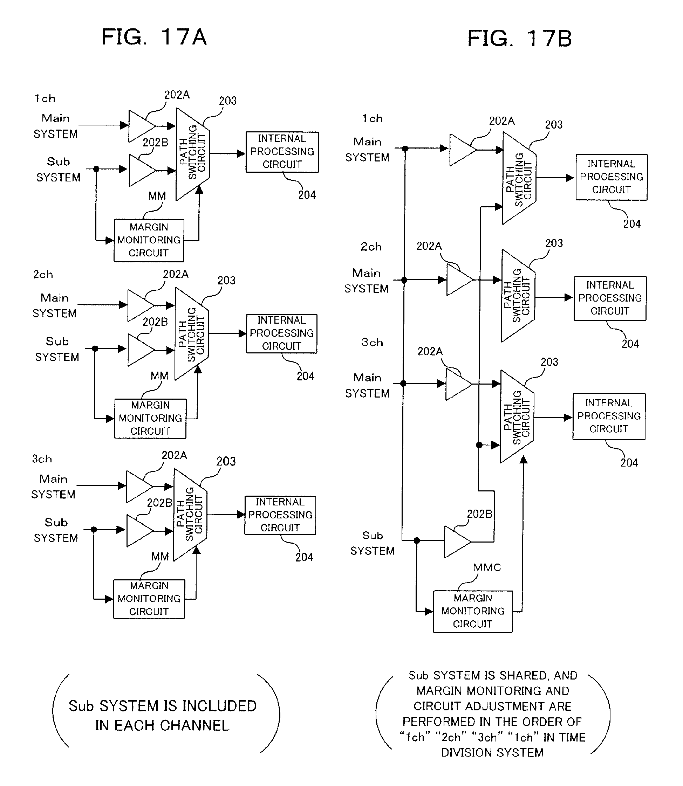

In the first embodiment, the Sub system (the input buffer 202B and the margin monitoring circuit MM) including a margin monitoring system is included in each channel of a multi channel (1ch to 3ch) as shown in FIG. 17A. In a seventh embodiment, only one of the input buffer 202B and a margin monitoring circuit MMC are shared by a plurality of data transmission systems (a multi channel system). In this manner, a circuit scale can be reduced. The above sharing may be in a time division system.

### <Eighth Embodiment>

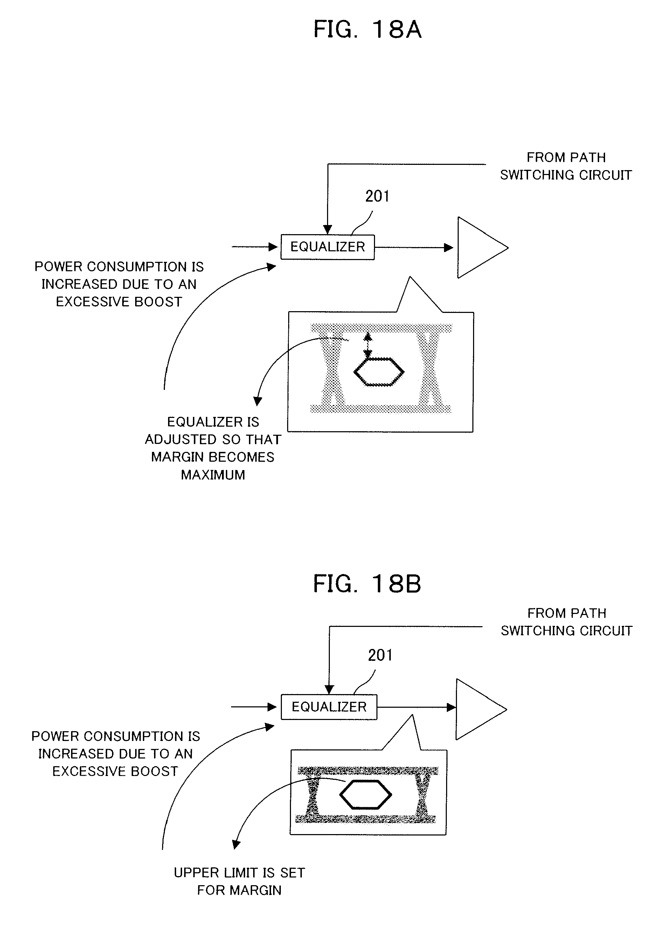

In the first embodiment, since there is no limitation provided to a margin with respect to adjustment of the circuit element, setting in which a margin becomes largest is selected as shown in FIG. 18A. For this reason, the margin may become excessive with respect to a mask provided in the receiving element. An excessive margin often leads to an excessive boost amount of the equalizer 201 which increases the power consumption. In view of the above, an upper limit is provided to a margin as shown in FIG. 18B. In this manner, a boost due to the excessive equalizer 201 can be prevented, and a power saving can be attempted.

### <Ninth Embodiment>

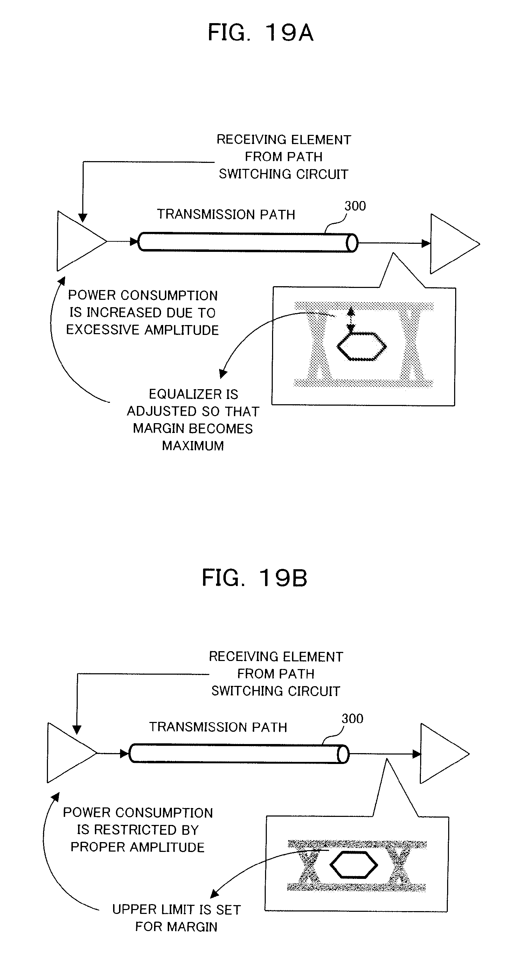

In the first embodiment, since there is no limitation in adjustment of the circuit element, setting in which a margin becomes largest is selected. For this reason, the margin may become excessive with respect to a mask provided in the receiving element as shown in FIG. 19A. In case output amplitude of the transmission element is not selected as the circuit element to be adjusted, amplitude is often excessively large in case of excessive margin. This increases the power consumption.

In contrast, an upper limit is provided to a margin as shown in FIG. 19B. In this manner, excessive amplitude output can be prevented, and a power saving can be attained.

### <Tenth Embodiment>

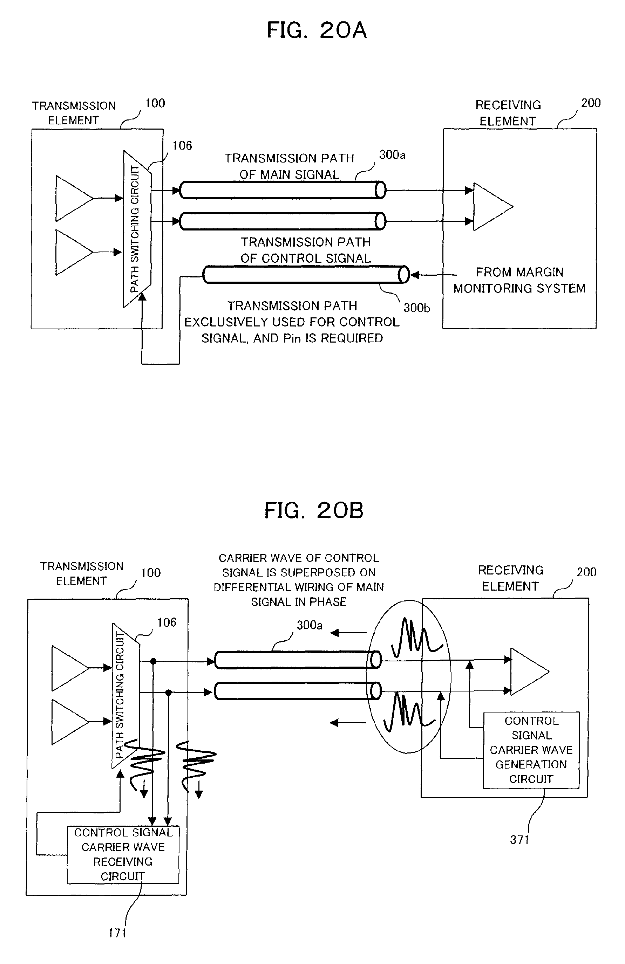

In the third embodiment, the description was made with respect to redundancy of the transmission element. As shown in FIG. 20A, in the third embodiment, a transmission path 300b for sending a control signal from the receiving element to the transmission element is added as a unit that controls the circuit element on the transmission element side, separately from a transmission path 300a of a main signal. For this reason, an exclusive signal Pin needs to be prepared for the transmission element, the receiving element, and a connector. This causes deterioration in implementation efficiency.

In contrast, as shown in FIG. 20B, a control signal carrier wave generation circuit 371 that generates a control signal carrier wave and superposes the control signal carrier wave on a wiring of the main signal is provided in the receiving element 200. Also, a control signal carrier wave receiving circuit 171 that receives the control signal carrier wave superposed on the main signal is provided in the transmission element 100. Then, the control signal from the receiving element 200 side is transmitted in a manner superposing on a differential data transmission system in phase. In this manner, transmission of the control signal to the transmission element can be realized without causing any influence on the transmission and receiving data and without adding a transmission path for the control signal.

### <Eleventh Embodiment>

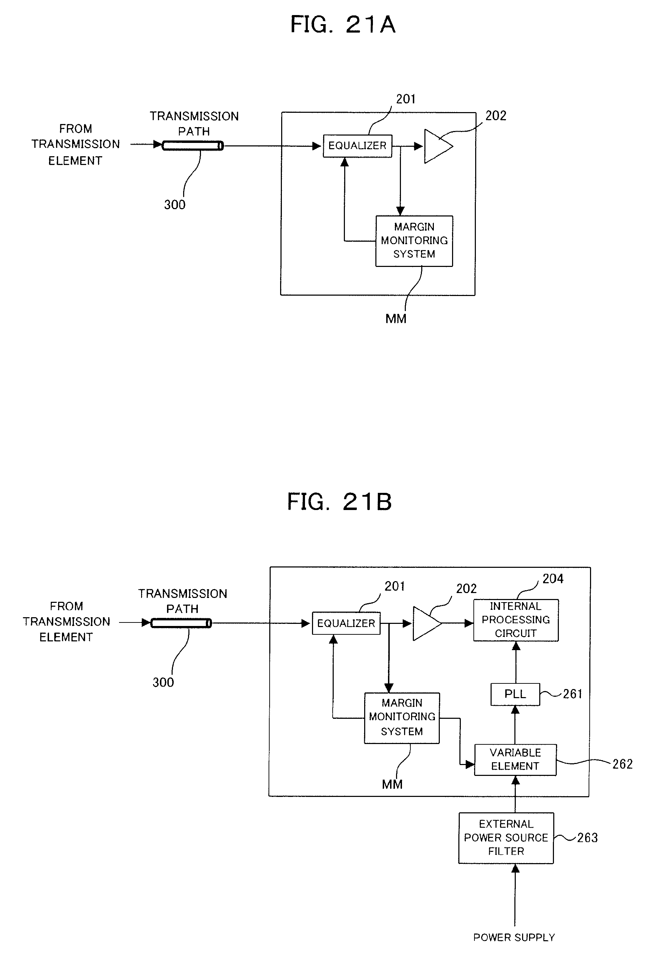

As shown in FIG. 21A, the first embodiment adopts an equalizer as the circuit element that controls a transmission characteristic. Alternatively, a similar advantageous effect can also be obtained by controlling a constant of circuit components (an inductance, a capacitor, and a resistor of a variable constant) that configure a power filter of a power source that supplies power to a PLL 261 of the receiving element 200 or the transmission element 100, as shown in FIG. 21B. In the eleventh embodiment, a jitter frequency resistance is adjusted in the above manner.

When an error due to a jitter is generated in a signal transmission system, a jitter frequency causing the error is often limited. Then, the jitter is often generated by noise mixed in a power supply system of the PLL 261. Therefore, a variable element (a capacitor, or an inductance) 262 is included in the inside of a power supply terminal to the PLL 261. Then, a characteristic of a filter that is determined by composition of the internal element and an external power source filter (a filter circuit) 263 prepared externally is changed. In this manner, the jitter causing the error can be restricted.

As described above, according to the present invention, adjustment of a transfer characteristic can be attempted while checking a result. Also, since measurement of a margin is configured with a digital circuit, application to an LSI is facilitated. Accordingly, an advantageous effect that the present invention can contribute to improvement in quality of signal transfer can be achieved.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A transmission characteristic adjustment device that adjusts a transmission characteristic between a transmission element and a receiving element interposing a transmission path, the device comprising:
an eye pattern aperture detection section that is provided on the receiving element side and detects an eye pattern aperture;
a margin calculation section that calculates a margin with respect to a mask included in the eye pattern aperture detected by the eye pattern aperture detection section; and
a circuit element setting section that evaluates a setting value of a circuit element of the transmission element or the receiving element having influence on a receiving waveform based on fluctuation of the margin calculated by the margin calculation section, and changes the setting value of the circuit element of the transmission element or the receiving element based on a result of the evaluation.

2. The transmission characteristic adjustment device according to claim 1, wherein
the circuit element setting section adjusts a transmission characteristic by changing an internal terminating resistance provided at an end of the transmission path.

3. The transmission characteristic adjustment device according to claim 1, wherein
the receiving element comprises a plurality of data receiving systems, and
the circuit element setting section adjusts a transmission characteristic by switching the data receiving systems based on a result of the evaluation.

4. The transmission characteristic adjustment device according to claim 1, wherein
the transmission element comprises a plurality of data transmission systems, and
the circuit element setting section adjusts a transmission characteristic by switching the plurality of data transmission systems based on a result of the evaluation.

5. The transmission characteristic adjustment device according to claim 4, wherein
the device adjusts a transmission characteristic by switching the plurality of data transmission systems so that a pre-emphasis amount, amplitude, and a transmission path are switched.

6. The transmission characteristic adjustment device according to any of the preceding claims, wherein
the circuit element setting section carries out detection of fluctuation of the margin at certain time intervals.

7. The transmission characteristic adjustment device according to any of the preceding claims, wherein
the device further comprises a temperature sensor that detects a temperature, and
the circuit element setting section carries out setting of a circuit element based on fluctuation of a temperature detected by the temperature sensor.

8. The transmission characteristic adjustment device according to any of claims 1 to 6, wherein
the device further comprises a voltage sensor that detects a power source voltage, and
the circuit element setting section carries out setting of a circuit element based on fluctuation of a power source voltage detected by the voltage sensor.

9. The transmission characteristic adjustment device according to any of the preceding claims, wherein
the transmission characteristic adjustment device is provided in each of a plurality of receiving systems provided in the receiving element.

10. The transmission characteristic adjustment device according to any of claims 1 to 8, wherein
the margin calculation circuit and the circuit element setting section are provided in a manner shared by a plurality of receiving systems provided in the receiving element.

11. The transmission characteristic adjustment device according to any one of the preceding claims, wherein
a reference maximum value is provided with respect to a margin, and
the circuit element setting section adjusts the setting value so that the margin falls within the reference maximum value.

12. The transmission characteristic adjustment device according to claim 11, wherein
the setting value is at least any one of an equalizer amount of a receiving system of the receiving element and output amplitude of a transmission system of the transmission element.

13. The transmission characteristic adjustment device according to claim 6, wherein
the circuit element setting section modulates a control signal for setting and transmits the control signal in a manner superposing on a differential data transmission system in phase.

14. The transmission characteristic adjustment device according to any one of the preceding claims, wherein
the circuit element setting section sets at least any one constant of an inductance, a capacitor, and a resistance that configure a power source filter of a power source that supplies power to a PLL of the transmission element or the receiving element, thereby adjusting a jitter frequency resistance.

15. A circuit board having a transmission characteristic adjustment device that adjusts a transmission characteristic between a transmission element and a receiving element interposing a transmission path, wherein
the transmission characteristic adjustment device comprises:
an eye pattern aperture detection section that is provided on the receiving element side and detects an eye pattern aperture;
a margin calculation section that calculates a margin with respect to a mask included in the eye pattern aperture detected by the eye pattern aperture detection section; and
a circuit element setting section that detects fluctuation of a margin calculated by the margin calculation section, evaluates a setting value of a circuit element of the transmission element or the receiving element having influence on a receiving waveform based on the detected fluctuation of the margin, and changes the setting value of the circuit element of the transmission element or the receiving element based on a result of the evaluation.

16. A transmission characteristic adjustment method that adjusts a transmission characteristic between a transmission element and a receiving element interposing a transmission path, the method comprising:
detecting an eye pattern aperture;
calculating a margin with respect to a mask included in the eye pattern aperture; and
detecting fluctuation of the calculated margin, evaluating a setting value of a circuit element of the transmission element or the receiving element having influence on a receiving waveform based on the detected fluctuation of the margin, and changing the setting value of the circuit element of the transmission element or the receiving element based on a result of the evaluation.

17. The transmission characteristic adjustment method according to claim 16, wherein
detecting of the fluctuation of the margin is carried out at certain time intervals.

18. The transmission characteristic adjustment method according to claim 16 or 17, wherein
setting of the circuit element is carried out by changing an internal terminating resistance provided at an end of the transmission path.

19. The transmission characteristic adjustment method according to claim 16 or 17, wherein
setting of the circuit element is carried out by switching a plurality of data receiving systems provided in the receiving element based on a result of the evaluation.

20. The transmission characteristic adjustment method according to claim 16 or 17, wherein
setting of the circuit element is carried out by switching a plurality of data transmission systems provided in the transmission element based on a result of the evaluation.
